# EUROPEAN PATENT APPLICATION

(11) **EP 0 899 494 A1**
(43) Date of publication of application: **03.03.1999**
(21) Application number: 98305886.8
(22) Date of filing: 23.07.1998
(51) Int. Cl.: F16L 9/147

(54) **Fluid transporting pipes and methods of making them**

(30) Priority: 01.09.1997 GB 9718480
(71) Applicant: DRAFTEX INDUSTRIES LIMITED, Edinburgh EH2 3AP, Scotland (GB)
(72) Inventor: Beurrier, Jean-Maurice, 44100 Nantes (FR); Pignatel, Jerome, 44240 La Chapelle-sur-Erdre (FR)
(74) Representative: Foster, David Martyn

(57) **Abstract**

A fluid-transporting pipe, such as a fuel pipe for a motor vehicle, having zero permeability to the transported fluid, has an inner tubular layer (10) such as made by extrusion of a suitable plastics material or an elastomer or thermoplastic elastomer. A metallic layer (11) is formed thereon by wrapping it with a ribbon (12) of metallic material, the metallic material having a low melting point and made, for example, of a metal alloy of indium, lead and tin. The ribbon is wound to provide overlapping regions (12A). The metal in these overlapping regions (12A) is then fused together by the heat produced by over-extrusion of an outer layer (14) of a plastics material or of an elastomer or thermoplastic elastomer. In this way, an homogeneous metal layer (11) is produced.

## Description

The invention relates to a fluid-transporting pipe, including a first tubular layer of a plastomer or elastomer material and a tubular layer thereon of metallic material.

The invention also relates to a method of manufacturing a fluid-transporting pipe, comprising the steps of forming a first tubular layer of a plastomer or elastomer material, and forming thereon a tubular layer of metallic material.

Such a pipe and a method of manufacturing are known, for example, from GB-A-2 111 164. In this known pipe and method, the layer of metallic material is metal foil which is placed over the first layer and its overlapping edges secured together by adhesive or by welding. It is important with such an arrangement to ensure that no leakage can take place through the metallic layer, such as along its overlapping edges. The invention is concerned with this problem.

According to the invention, therefore, the pipe as first set forth above is characterised in that the metallic material has a melting point which is at a lower temperature than that which damages the first layer, whereby to form an homogeneous layer.

According to the invention, also, the method as first set forth above is characterised in that characterised in that the forming step is carried out by applying metallic material having a melting point at a temperature lower than that which damages the plastomer or elastomer material, whereby to form an homogeneous layer.

Fuel pipes embodying the invention, for use in vehicles, and methods according to the invention for making such pipes, will now be described, by way of example only, with reference to the accompanying diagrammatic drawings in which:
Figure 1 is a longitudinal section through part of one of the pipes at an early stage in its manufacture, taken on the line I-I of Figure 2;
Figure 2 is a cross-section on the line II-II of Figure 1;
Figure 3 is a longitudinal cross-section through the pipe of Figure 1 at a later stage during its manufacture, taken on the line III-III of Figure 4;
Figure 4 is a cross-section on the line IV-IV of Figure 3;
Figure 5 is a longitudinal section through the pipe at a later stage in its manufacture, taken on the line V-V of Figure 6;
Figure 6 is a cross-section on the line VI-VI of Figure 5;
Figure 7 is a longitudinal section through another form of the pipe, taken on the line VII-VII of Figure 8; and
Figure 8 is a cross-section on the line VIII-VIII of Figure 7.

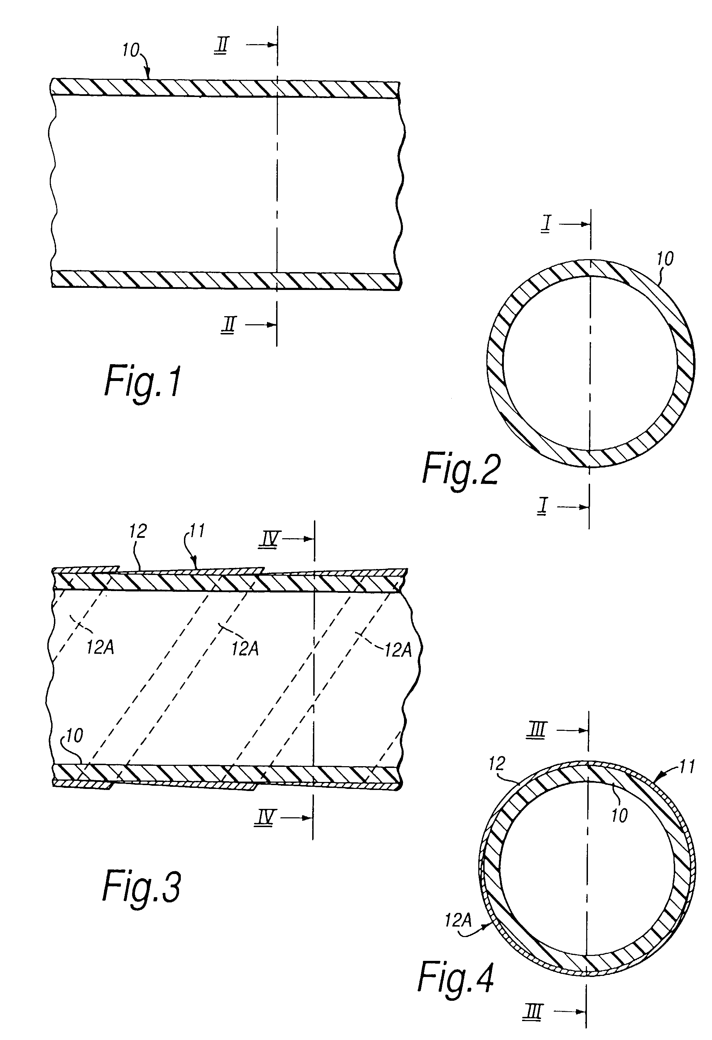

At an initial stage in the manufacture of the pipe to be described with reference to Figures 1 to 6, a tube 10 (Figure 1) is formed, such as by extrusion, from plastics material or from an elastomer or a thermoplastic elastomer. In a manner to be explained, the tube 10 forms an inner layer of the finished pipe.

The next stage is shown in Figures 3 and 4. A metallic layer 11 is formed around the tube 10 by means of a ribbon 12 of metal which is wound spirally around the outside of the tube 10 with each turn partially overlapping the previous turn, the overlapping regions being shown at 12A. The choice of metal for the ribbon 12 is important. Preferably, the ribbon 12 is made of a metal or a metal alloy having a low melting point, for example a melting point within the region 90 to 300°C. A suitable metal alloy is formed from indium, lead and tin, but other alloys or metals with suitably low temperature melting points may be used instead. The metal ribbon also has a low thickness.

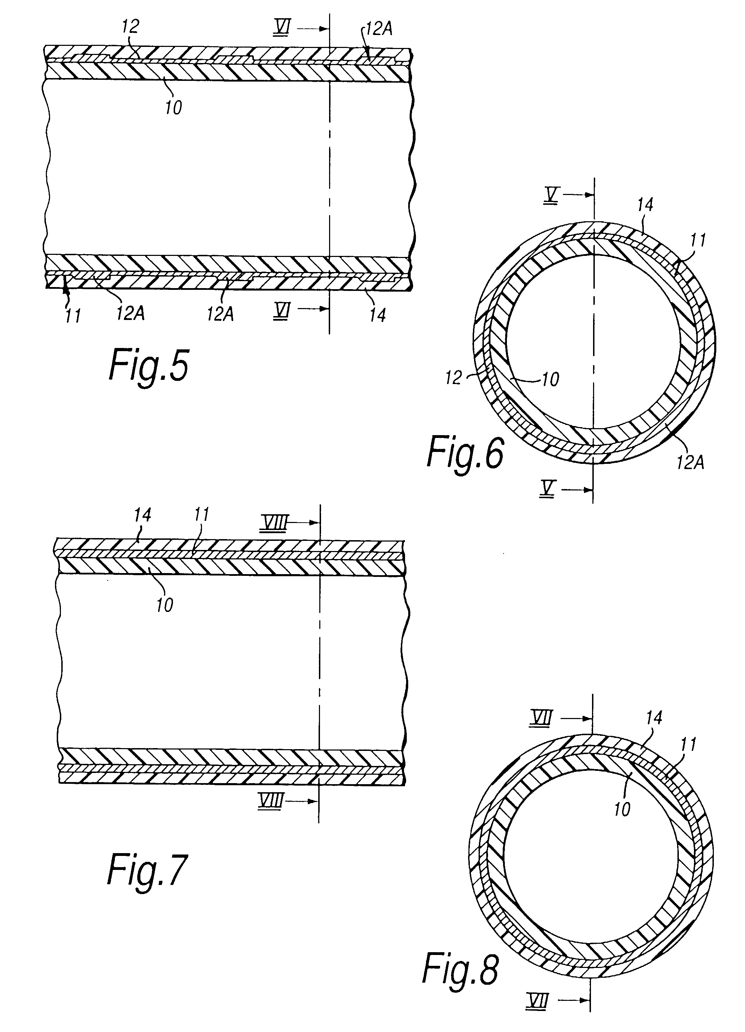

During the next stage in the method, shown in Figures 5 and 6, an external layer 14 of plastics material, or of an elastomer or thermoplastic elastomer, is formed (such as by extrusion) over the outside of the metal ribbon 12. The temperature of the layer 14, as it is formed, is sufficiently high, in relation to the low melting point of the metal ribbon, that the metal melts so as to fuse the metal ribbon to itself within the overlapping regions 12A. An homogeneous tubular layer of metal is therefore produced.

In this way, a fuel pipe is produced which has a zero permeability to fuel. In the past, fuel pipes have been made of rubber. However, these present a certain permeability to fuels. For this reason, fuel pipes made of thermoplastic materials are used. These have a significantly greater impermeability to fuel than rubber. However, the regulations relating to the required impermeability to fuel are becoming more and more strict. Fluorinated plastics materials have been used, but these are very expensive. It has also been proposed to incorporate a metallic layer within fuel pipes made of thermoplastic material, such as by means of a layer of overlapping aluminium ribbon. In order to provide a suitable seal between the overlapping parts of this ribbon, an adhesive or other sealant has been incorporated. However, such an arrangement is disadvantageous because the adhesive or sealant between the overlapping ribbon portions forms a series of weak points along the length of the fuel pipe: the adhesive or solvent may have an unsuitably low resistance to fuel, thus increasing the permeability of the pipe to fuel and thus possibly producing a fire risk. Such disadvantages are avoided by the fuel pipe described above because the metal ribbon produces an homogeneous metal layer after the overlapping regions 12A have become melted together as described with references to Figures 5 and 6.

Because the metal ribbon has a low thickness, it has only a small effect on the flexibility of the pipe.

Because the metal of the ribbon 12 has a low melting point, it can be easily melted by the temperature and heat of the extruded outside layer 14. It is not necessary to apply additional heat which might damage the material of the inner tube 10.

However, various modifications to the method are possible. For example, it may be advantageous under certain circumstances to melt the metal of the ribbon 12 partially or completely before applying the external covering layer 14. This can be done by the application of a suitable source of external heat, the temperature of which should not be great enough to damage the internal layer 12.

In another modification, the external layer 14 can be applied at a temperature which does not melt, or does not completely melt, the metal in the overlapping regions 12A. External heat is applied after the layer 14 has been extruded into position, this external heat then partially or completely melting the metal in its overlapping regions 12A. The heating temperature should not be great enough to damage the material of the layers 10 and 14. The external heat can, for example, be applied during the process of bending the pipe into a required configuration for a particular application. Thus, the pipe can be bent into the required configuration, using a suitable former or jig to hold it in this configuration while the external heat is applied. This external heat melts the overlapping regions 12A of the metal ribbon, between the layers 10 and 14, and not only seals the overlapping regions to produce the required zero permeability to fuel but may also cause the pipe to retain the required configuration after removal from the former or jig. Any strain exerted on the metal ribbon during the bending operation is removed by the effect of the heat in melting the ribbon. The external heat may be applied by steam injected through the tube 10.

In another example, the pipe can be bent into the required configuration after the application of heat to the metal ribbon has rendered it homogeneous. For example, steam can be injected into the tube 10 to render the pipe sufficiently flexible to enable it to be bent into the required configuration. This heat also partially re-melts the metal layer 12 to remove any strain caused by the bending operation.

Instead of metal ribbon wound spirally around the tube 10, a length of metal foil can be wrapped around a corresponding length of the pipe so as to produce a longitudinally extending overlapped "seam" which is melted using one of the methods already described, in order to produce the desired homogeneous metal layer.

Another method of manufacture will be described with reference to Figures 7 and 8. According to this method, a pipe is produced by co-extrusion of multi-layers: a first tubular layer forming the internal tube 10, a second tubular layer 11 of metal, and the outer tubular layer 14. As before, the material forming the layers 10 and 14 may be any suitable plastics, elastomer or thermoplastic elastomer material. The metal 11 is a suitable metal or metal alloy having a low melting temperature, again preferably within the range 90 to 300°C. In this way, again, a fuel pipe is produced having an internal homogeneous metal layer which gives the pipe zero permeability to fuel. The low melting point of the metal layer 11 ensures that the temperature at which it is extruded does not damage the material or materials of the layers 10 and 14. The thickness of the extruded layer is also low, so as not to affect the flexibility of the pipe significantly.

The method described with reference to Figures 7 and 8 may be modified in various ways.

For example, the inner tube 10 can be first extruded and then dipped or otherwise immersed in liquid metal which then solidifies to form the required metal layer 11. The external layer 14 is then extruded around the outside of the metal layer 11.

In another modification, the metal layer 11 is sprayed onto the inner tube 10 and allowed to solidify, whereafter the external layer 14 is extruded in position.

Instead, the metal layer 11 may be applied to the internal layer 10 by metallisation in a vacuum, or by cathodic deposition of the metallic material in powder form. External heat may then be applied to form the homogeneous metal layer 11, whereafter the external layer 14 is applied.

In another modification, the metal layer 11 is deposited chemically or electro-chemically on the inner tube 10, whereafter the external layer 14 is applied. External heat may then be applied to form the homogeneous metal layer 11.

In a further modification, metal vapour is produced by sublimation in a chamber into which the tube 10 is inserted so that the metal vapour becomes deposited on the tube 10 and solidifies.

In each of these examples, it will be seen that an homogeneous layer of metal is produced around the tube 10.

## Claims

1. A fluid-transporting pipe, including a first tubular layer (10) of a plastomer or elastomer material and a tubular layer (11) thereon of metallic material, characterised in that the metallic material has a melting point which is at a lower temperature than that which damages the first layer (10), whereby to form an homogeneous layer.

2. A pipe according to claim 1, characterised in that the metallic layer (11) is in the form of a strip (12) of the metallic material wrapped around the first layer (10) and having overlapping areas (12A) which are fused together in situ by melting of the metallic material.

3. A pipe according to claim 2, characterised in that the strip (12) of metallic material is a strip of metallic ribbon (12) wrapped spirally around the first layer (10).

4. A pipe according to claim 2, characterised in that the strip (12) of metallic material has a predetermined length and is wrapped around a corresponding length of the first layer (10).

5. A pipe according to claim 1, characterised in that the metallic layer (11) is applied in a molten or partially molten state and solidifies on the first layer (10).

6. A pipe according to any preceding claim, characterised in that the first layer is an inner layer (10) and the metallic layer (11) is on the outside of the first layer (10).

7. A pipe according to claim 6, characterised by an outer layer (14) of plastomer or elastomer material over the outside of the metallic layer (11).

8. A pipe according to claim 2, characterised in that the first layer is an inner layer (10) and the strip (12) of metallic material is wound around the outside of the first layer (10), and by an outer layer (14) of plastomer or elastomer material which is extruded over the metallic material at such a temperature as to fuse the overlapping areas (12A) together by melting of the metallic material.

9. A pipe according to any preceding claim, characterised in that the metallic layer (12) is made from metallic material having a melting point in the range 90 to 300°C.

10. A pipe according to claim 9, characterised in that the metallic layer (11) is a layer of a metal alloy.

11. A pipe according to claim 10, characterised in that the metal alloy is an alloy of indium, lead and tin.

12. A pipe according to claim 1, characterised in that the first layer (10) is an extruded inner layer and the metallic layer (11) is co-extruded onto the outside of the inner layer (10).

13. A pipe according to claim 12, characterised in that, additionally, an outer layer (14) of a plastomer or elastomer material is co-extruded onto the outside of the metallic layer (11).

14. A method of manufacturing a fluid-transporting pipe, comprising the steps of forming a first tubular layer (10) of a plastomer or elastomer material, and forming thereon a tubular layer (11) of metallic material, characterised in that the forming step is carried out by applying metallic material (12) having a melting point at a temperature lower than that which damages the plastomer or elastomer material (10), whereby to form an homogeneous layer.

15. A method according to claim 14, characterised in that the step of applying forming the metallic layer comprises the step of winding a strip (12) of the metallic material around the outside of the first layer (10) with overlapping areas (12A), and applying heat to the strip (12) to fuse the overlapping areas (12A) together by melting of the metallic material.

16. A method according to claim 15, characterised in that the strip of metallic material is a strip (12) of metallic ribbon wrapped spirally around the first layer (10).

17. A method according to claim 16, characterised in that the strip (12) of metallic material has a predetermined length and is wrapped around a corresponding length of the first layer (10).

18. A method according to any one of claims 15 to 17, characterised in that the step of applying the heat to the strip (12) of metallic material is carried out by applying an external layer (14) of a plastomer or elastomer material around the outside of the strip (12) and at a sufficient temperature to fuse the overlapping areas (12A) of the strip together.

19. A method according to claim 18, characterised in that the step of applying the external layer is an extrusion step.

20. A method according to any one of claims 15 to 17, characterised in that the step of applying the heat to the strip (12) of metallic material comprises the step of applying heat thereto from an external source.

21. A method according to any one of claims 15 to 17, characterised by the step of bending into a predetermined configuration the first layer (10) with the strip (12) of metallic material thereon and applying the heat to the metallic strip (12).

22. A method according to claim 20 or 21, characterised by the step of applying an external layer (14) of plastomer or elastomer material around the outside of the strip (12) of metallic material.

23. A method according to claim 14, characterised in that the first layer (10) is an inner layer and is co-extruded with the metallic material which is applied on the outside of the first layer (10) to form the layer (11) of metallic material.

24. A method according to claim 23, characterised in that, substantially simultaneously with the co-extrusion of the first layer (10) and the metallic layer (11), an outer layer (14) of plastomer or elastomer material is co-extruded onto the outside of the metallic layer (11).

25. A method according to claim 14, characterised in that the metallic layer (11) is formed by dipping the first layer (10) in the metallic material in a molten state.

26. A method according to claim 14, characterised in that the step of applying the metallic layer (11) is carried out by spraying the metallic material in the molten state onto the first layer (10).

27. A method according to claim 14, characterised in that the step of applying the metallic material is carried out by metallisation of the first layer (10) with the metallic material in a vacuum.

28. A method according to claim 14, characterised in that the step of applying the metallic material is carried out by applying the metallic material to the first layer (10) in powder form.

29. A method according to claim 14, characterised in that the step of applying the metallic material is carried out by chemical or electro-chemical deposition of the metallic material on the first layer (10).

30. A method according to claim 14, characterised in that the step of applying the metallic material is carried out by cathodic deposition of the metallic material in powder form.

31. A method according to claim 14, characterised in that the step of applying the metallic material is carried out by sublimation of the metallic material and subsequent deposition on the first layer of the vapour so produced.

32. A method according to any one of claims 26 to 31, characterised by the step of applying an external tubular layer (14) of a plastomer or elastomer material around the metallic layer (11) after formation thereof.

33. A method according to claim 32, characterised in that the step of applying the external layer (14) is an extrusion step.
